# EUROPEAN PATENT SPECIFICATION

(11) **EP 1 980 544 B1**
(45) Date of publication and mention of the grant of the patent: **16.11.2016**
(21) Application number: 08006794.5
(22) Date of filing: 03.04.2008
(51) Int. Cl.: C04B 28/02, C04B 40/00

(54) **Process for producing powder**
Verfahren zur Herstellung von Pulver
Procédé de production de poudre

(30) Priority: 06.04.2007 JP 2007100621
(43) Date of publication of application: 15.10.2008
(73) Proprietor: Kao Corporation, Chuo-ku Tokyo (JP)
(72) Inventor: Yamamuro, Hotaka, Wakayama-shi Wakayama (JP); Kojima, Toshiharu, Wakayama-shi Wakayama (JP); Morii, Yoshikazu, Wakayama-shi Wakayama (JP); Koyanagi, Koji, Wakayama-shi Wakayama (JP)
(74) Representative: Hoffmann Eitle

(56) References cited:
- EP-A1- 1 693 352
- WO-A1-96/17042
- GB-A- 1 353 121
- JP-A- 2000 026 146
- JP-A- 2001 190 942
- JP-A- 2004 189 978
- US-A- 5 703 037

## Description

### Field of the invention

The present invention relates to a process for producing a powder from a viscous material containing specific compounds.

### Background of the invention

To modify rheology of an aqueous solution or slurry, it is desired to appropriately regulate a viscosity thereof according to intended use and applications. For regulating a viscosity of an aqueous solution or slurry, there have been conventionally used techniques such as addition of a thickener and a water-reducing agent, heating and cooling, and regulation of electrolyte concentration. Among them, a technique of addition of a water-soluble polymer compound to a slurry system to increase viscosity due to entanglement of polymer molecules has come into practical use in a variety of applications and mainly in a civil engineering and construction field, because the technique achieves a good thickening effect with low cost.

For slurries containing hydraulic powders, the technique of addition of a water-soluble polymer compound to the slurry to increase viscosity due to entanglement of polymer molecules has come into practical use in a variety of applications and mainly in a civil engineering and construction field, because the technique achieves a good thickening effect with low cost. For example, JP-A2004-189978 describes use of cellulose derivatives such as methylcellulose and hydroxyethyl cellulose, and JP-A2005-133075 describes use of a water-soluble polymer compound such as poly (ethylene oxide), which are used in paste, mortar, underwater concrete, and high-flowable concrete to enhance material segregation resistance.

JP-A 2004-189978 discloses a rheology modifier easily dissolved in an aqueous solution and slurry, obtained from a kit containing specific compounds (A) and (B).

JP-A 2005-133075 discloses a surfactant composition containing a cationic surfactant, one or more compounds selected from the group consisting of anionic aromatic compounds and brominated compounds, and a cationic polymer, which composition exhibits a good modification effect of rheology in the case of a slurry containing clay.

JP-A2001-190942 discloses a method for producing a powder of polycarboxylic acid copolymer and the like, containing forming a viscous thin film on a supporting body and decreasing the viscosity of the thin film to form a powder.

### Summary of the invention

The present invention relates to a process for producing a powder comprising a cationic surfactant (b), including the steps of mixing water, an anionic aromatic compound (a) and the cationic surfactant (b) to obtain a viscous material and drying the viscous material (drying step), the viscous material, heated at 50 to 120°C, being fed to the drying step wherein the method is as defined in claim 1.

The present invention also relates to a powder obtained by the process according to the present invention, which contains water in an amount of 5% or less by weight.

The present invention also relates to a method for modifying the rheology of a composition containing water, including adding the powder of the present invention to the composition containing water.

The present invention also provides a premixed hydraulic composition containing the powder and a hydraulic powder, and the premixed hydraulic composition further containing aggregates.

The present invention also provides use of the above shown powder for producing a premixed hydraulic composition containing a hydraulic powder; use of the above shown powder for producing a premixed hydraulic composition containing a hydraulic powder and aggregates; and a process for producing a premixed hydraulic composition containing a hydraulic powder including mixing the above shown powder with a hydraulic powder or a process for producing a premixed hydraulic composition containing a hydraulic powder and aggregates, including mixing the above shown powder with a hydraulic powder and aggregates.

### Detailed Description of the invention

Cationic surfactants (long-chain monoalkyltrimethylammonium salts) such as those used in JP-A2004-189978 and JP-A2005-133075 are generally available in the form of aqueous solution, because these are generally prepared by reactions in aqueous solutions. To obtain powdery cationic surfactants, water must be removed from aqueous solutions thereof. However, powdery cationic surfactants thus obtained are highly hygroscopic, and difficult to be distributed as powdery products in practice. In Examples of JP-A2004-189978, a powdery product is prepared by freezing and drying, which process is desired to be improved in productivity. JP-A2005-133075 describes the possibility of the use of ingredients as powders, but no specific method of powdering a cationic surfactant.

JP-A2001-190942 uses a polycarboxylic acid-based copolymer, which has fluidity at room temperature.

The present invention provides a process for producing a powder containing a cationic surfactant, which has good powder properties such as less caking.

According to the present invention, a powder having good powder properties such as less caking is obtained from an anionic aromatic compound and a cationic surfactant.

In the production process of the present invention, to keep the powdery state of smaller hygroscopicity, the powder is prepared, not by drying the cationic surfactant (b) alone, but from a viscous material as an intermediate material obtained by mixing the cationic surfactant (b) with the anionic aromatic compound (a) and water to form a threadlike micelle. Such a process for producing a powder from a viscous material is not disclosed in JP-A2004-189978 or JP-A2005-133075. It is a new finding never known conventionally that the cationic surfactant (b), which is difficult to be powdered alone, is easily powdered by making a viscous material with an anionic aromatic compound, and the resultant powder from the viscous material has a less tendency to cake and maintains a modification effect of rheology, which is an essential property.

The production process of the present invention is applicable to a process for producing a powder suitable as a rheology modifier, including mixing water, an anionic aromatic compound (a) and a cationic surfactant (b) to obtain a viscous material (which may further contain a cationic polymer) and heating the viscous material at the specific temperature, the viscous material being fed to the drying step.

The viscous material used in the present invention contains the anionic aromatic compound (a), the cationic surfactant (b), and water.

The cationic surfactant (b) is a cationic surfactant in the form of a quaternary salt. The cationic surfactant in the form of a quaternary salt has, in its structure, at least one saturated or unsaturated linear or branched alkyl group having 10 to 26 carbon atoms. Examples include alkyl (C₁₀ to C₂₆) trimethylammonium salts, alkyl (C₁₀ to C₂₆) pyridinium salts, alkyl (C₁₀ to C₂₆) imidazolinium salts, and an alkyl (C₁₀ to C₂₆) dimethylbenzylammonium salts. Specific examples include hexadecyltrimethylammonium chloride, hexadecyltrimethylammonium bromide, hexadecyltrimethylammonium methosulfate, octadecyltrimethylammonium chloride, octadecyltrimethylammonium bromide, tallow trimethylammonium chloride, tallow trimethylammonium bromide, hydrogenated tallow trimethylammonium chloride, hydrogenated tallow trimethylammonium bromide, hexadecylethyldimethylammonium chloride, octadecylethyldimethylammonium chloride, hexadecylpropyldimethylammonium chloride, hexadecylpyridinium chloride, 1,1-dimethyl-2-hexadecylimidazolinium chloride, hexadecyldimethylbenzylammonium chloride and the like. Two or more of these compounds may be simultaneously used. From the viewpoints of water solubility and thickening effect, hexadecyltrimethylammonium chloride, octadecyltrimethylammonium chloride, and hexadecylpyridinium chloride and the like are specifically preferred. From the viewpoint of thickening property, two or more of those cationic surfactants different in the number of carbon atoms in the alkyl group may be simultaneously used.

The anionic aromatic compound (a) is selected from carboxylic acids having aromatic rings and salts thereof, phosphonic acids and salts thereof, and sulfonic acids and salts thereof. Specific examples include salicylic acid, p-toluenesulfonic acid, sulfosalicylic acid, benzoic acid, m-sulfobenzoic acid, p-sulfobenzoic acid, 4-sulfophthalic acid, 5-sulfoisophthalic acid, p-phenolsulfonic acid, m-xylene-4-sulfonic acid, cumenesulfonic acid, methylsalicylic acid, styrenesulfonic acid and chlorobenzoic acid and the like. Those may form salts, and may be used as a mixture of two or more thereof. When the anionic aromatic compound (a) is a polymer, however, its weight average molecular weight is preferably less than 500.

The anionic aromatic compound (a) and the cationic surfactant (b) used in the present invention are used in such combination as capable of forming a threadlike micelle in an aqueous solution containing (a) and (b), and preferably in a combination that a viscosity at 20°C of an aqueous solution of 1% by weight of an equimolar mixture of (a) and (b) is 100 mPa·s or more, more preferably 200 mPa·s or more, and even more preferably 500 mPa·s or more. In context, the viscosity is measured with a Brookfield viscometer (with rotor C or rotor No. 3 at 1.5 rpm to 12 rpm) at 20°C.

The viscous material used in the present invention contains the cationic surfactant (b) in an amount of 1 to 40% by weight, preferably 5 to 30% by weight, and more preferably 10 to 20% by weight. The viscous material contains the anionic aromatic compound (a) in an amount of 1 to 35% by weight, preferably 5 to 25% by weight, and more preferably 7 to 15% by weight. The residual part of the viscous material is water.

### <Cationic polymer (c)>

The viscous material used in the present invention preferably contains the cationic polymer to obtain a fine powder having good properties. Examples of the cationic polymer (c) include cationic polymers containing cationic nitrogen, cationic polymers further containing a quaternary salt structure in molecules, and particularly cationic polymers containing cationic nitrogen that is quaternary nitrogen.

Examples of the cationic polymer (c) include homopolymers of dimethylaminoethyl (meth)acrylate, dimethylaminopropyl (meth)acrylate, (meth)acrylamide ethyldimethylamine, (meth)acrylamide propyldimethylamine, allylamine, allylmethylamine, allyldimethylamine, diallylamine, and diallylmethylamine, and copolymers of these monomers with other monomers. Those may be used in the neutralized form or unneutralized form.

Examples of the cationic polymer (c) also include polyalkylenepolyamines such as diethylenetriamine, triethylenetetramine, tetraethylenepentamine, dipropylenetriamine, and tripropylenetetramine, and polymers obtained by adding alkylene oxides having 2 to 4 carbon atoms to polyalkylenepolyamines. Those may be used in the neutralized form or unneutralized form.

In addition, polyethyleneimines and polymers obtained by adding alkylene oxides having 2 to 4 carbon atoms to polyethyleneimines can be used as the cationic polymer (c).

The cationic polymer (c) preferably contains cationic nitrogen, and more preferably contains cationic nitrogen bonded to a group selected from an alkyl group having 1 to 22 carbon atoms, a polyoxyalkylene group containing an oxyalkylene group having 2 to 8 carbon atoms, a hydrogen atom, and a group represented by the formula (1): 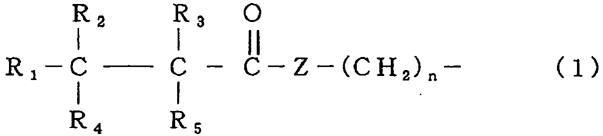 (wherein, R¹ to R⁵, which may be the same or different, each represent a hydrogen atom or an alkyl or alkenyl group having 1 to 22 carbon atoms; Z represents -O- or -NY- (Y is a hydrogen atom or an alkyl group having 1 to 10 carbon atoms); and n represents the number from 1 to 10; wherein, R¹ and R³ may be integrated in the polymer structure, and in this case, R¹ and R³ do not exist.)

Examples of a compound from which the group represented by the formula (1) is derived include methacryloyloxyethyltrimethylammonium salts, methacryloyloxyethyldimethylethylammonium salts, methacryloyloxypropyltrimethylammonium salts, methacryloyloxypropyldimethylethylammonium salts, methacrylamideethyltrimethylammonium salts, methacrylamideethyldimethylethylammonium salts, methacrylamidepropyltrimethylammonium salts, methacrylamidepropyldimethylethylammonium salts, acryloyloxyethyltrimethylammonium salts, acryloyloxyethyldimethylethylammonium salts, acryloyloxypropyltrimethylammonium salts, acryloyloxypropyldimethylethylammonium salts, acrylamideethyltrimethylammonium salts, acrylamideethyldimethylethylammonium salts, acrylamidepropyltrimethylammonium salts, and acrylamidepropyldimethylethylammonium salts. Among them, alkylsulfate salts are preferred, and particularly ethylsulfate and methylsulfate salts.

The cationic polymer (c) containing cationic nitrogen derived from a diallylalkylammonium salt, preferably a diallyldimethylammonium salt is also preferred. Specific examples include copolymers of a diallyldimethylammonium salt and an acrylate monomer.

Examples of the cationic polymer (c) also include those having structures derived from monomers selected from (meth)acrylate monomers having cationic groups, styrene monomers having cationic groups, vinylpyridine monomers, vinylimidazoline monomers, and diallyldialkylamine monomers.

Examples of a counter ion to the cationic polymer (c) include anionic ions such as halogen ions, sulfuric acid ions, alkylsulfuric acid ions, phosphoric acid ions, and organic acid ions.

Specific examples of the cationic polymer (c) include polyallyltrialkylammonium salts such as polyallyltrimethylammonium salts, poly(diallyldimethylammonium salts), polymethacryloyloxyethyldimethylethylammonium salts, polymethacrylamidepropyltrimethylammonium salts, cationized starch, cationized cellulose, and cationized hydroxyethyl cellulose. Those may be obtained by polymerizing a monomer having a quaternary salt structure, or by quaternizing a corresponding polymer with a quaternizing agent. Those may not be a homopolymer, but a copolymer with a copolymerizable monomer according to need. Specific examples include diallyldimethylammonium salts-SO₂ copolymers, diallyldimethylammonium salts-acrylamide copolymers, diallyldimethylammonium salts-acrylic acid-acrylamide copolymers, methacryloyloxyethyldimethylethylammonium salts-vinylpyrrolidone copolymers, and methacrylamidepropyltrimethylammonium salts-vinylpyrrolidone copolymers. Those may contain unreacted monomers, by-products, and polymers having different cationization densities. Those may be used in combination of two or more thereof.

Among them, cationic polymers selected from poly(diallyldimethylammonium salts), polymethacryloyloxyethyldimethylethylammonium salts, polymethacrylamidepropyltrimethylammonium salts, methacryloyloxyethyldimethylethylammonium salts-vinylpyrrolidone copolymers, and methacrylamidepropyltrimethylammonium salts-vinylpyrrolidone copolymers are preferred. Among selected cationic polymers, from the viewpoint of rheology modifying effect, those having alkylsulfuric ions as counter ions, particularly ethylsulfate and methylsulfate are more preferred.

A molecular weight of the cationic polymer (c) is preferably 1,000 or more, and more preferably from 1,000 to 3,000,000. The cationic polymer (c) is distinguished by this point from the cationic surfactant (b). The molecular weight is a weight average molecular weight measured by gel permeation chromatography under the following conditions.
column: α-M (Tosoh Corporation), two connected
eluent: 0.15 mol/L sodium sulfate, 1% acetic acid aqueous solution
flow rate: 1.0 mL/min
temperature: 40°C
detector: RI

As a molecular weight standard, pullulan is used.

From the viewpoints of viscoelasticity retention over time immediately after from preparing the slurry, the cationic polymer (c) preferably has a cationization density of 0.5 to 10 meq/g, more preferably 1 to 9 meq/g, and even more preferably 3 to 8 meq/g. A cationization density can be measured by the method described in Examples below.

The viscous material used in the present invention contains the cationic polymer (c) preferably in an amount of 0.1 to 20% by weight, more preferably 0.5 to 15% by weight, and even more preferably 1 to 10% by weight.

The viscous material in which the anionic aromatic compound (a) and the cationic surfactant (b) together form threadlike micelles in water is dried to obtain a rigid solid. Formation of the threadlike micelle thus provides a rigid dried matter, from which a fine powder can be easily obtained by milling. In addition, the cationic polymer (c) has a property of forming a strong film by drying. Formation of the threadlike micelle and simultaneous use of cation polymer provides a more rigid dried matter, and from which a fine powder can be more easily obtained by milling. However, a dried matter obtained from an aqueous solution of only the cationic polymer (c) is too rigid and very difficult to be powdered as described in the Comparative Example below. The powder obtained according to the present invention is presumed to be composed of the anionic aromatic compound (a), as well as the cationic surfactant (b), and a dried threadlike micelle formed with the anionic aromatic compound (a) and the cationic surfactant (b).

In the present invention, a gel of (a) and (b) as an intermediate material can be dried and milled with a drum dryer, and thus a powder can be prepared without a filler. Direct drying of the gel of the threadlike micelle can suppress hygroscopicity of (b). Thus, incorporation of (c) can be also made.

In the process for producing a powder of the present invention, the viscous material containing the anionic aromatic compound (a), the cationic surfactant (b), water and preferably the cationic polymer (c) is heated at 50 to 120°C and fed to the drying step.

These ingredients are generally mixed and stirred, and optionally added with an anti-foaming agent and the like to obtain the viscous material, which is dried.

Other conventional thickeners can be used together with the compounds (a) and (b) of the present invention. Examples of other conventional thickeners include cellulose derivatives, polyacrylate polymers, polyethyleneoxides, polyvinyl alcohols, gum-based polysaccharides, and microbial fermentation polysaccharides and the like.

In the surfactant composition of the present invention, other surfactant can be used together. As other surfactants, amphoteric surfactants and nonionic surfactants are preferred. Particularly, betaine compounds and alcohol-alkylene oxide adducts are preferred.

In the surfactant composition of the present invention, a solvent can be used to control viscosity and the like. As the solvent, alcohols and cellosolve-based solvents are preferred. From the viewpoints of the rheology improving effect and flash point, propylene glycol is preferred.

The surfactant composition of the present invention may contain other ingredients such as a dispersant, an AE agent, a retardant, a rapid strength agent, an accelerator, a bubbling agent, a foaming agent, an anti-foaming agent, a rust-proofing agent, a colorant, a mildew-proof ing agent, a cracking reducing agent, an expanding agent, a dye, a pigment, an anti-scaling agent, a slime-processing agent, a preservative, and an emulsifier according to applications. A rheology modifier for slurry containing the surfactant composition of the present invention may also contain these ingredients.

In the present invention, the viscous material obtained by mixing water, anionic aromatic compound (a) and cationic surfactant (b) is heated at 50 °C to 120 °C and then fed to the drying step. The heating temperature is preferably 50°C to 100 °C, more preferably 50 °C to 80 °C, even more preferably 60 °C to 80°C from the viewpoint of easy handling when the thin film is formed on the supporting body.

Drying of the viscous material is preferably conducted by applying the viscous material heated at the specific temperature to a supporting body in order to form a thin film of the viscous material on the supporting body and heating the film. Forming and heating of the thin film are preferably conducted by a conductive heat drying method. The conductive heat drying method can be conducted with a known conductive heating dryer such as a drum dryer (available from Katsuragi Ind. Co. Ltd., Kusuki machine Ltd., Tamagawa Machinery Co., Ltd. , etc.), a CD dryer (available from Nishimura Tekkosho Co., Ltd.), or the like. These dryers supply and attach liquid onto a surface of the cylindrical drum or the disk to form a thin film and dry the thin film by heat conduction from a heat source. The thickness of the thin film of the viscous material (an applied thickness thereof) is determined in consideration of a solid content of the liquid to be applied, a processability of the dryer, a rate of drying, a state of the thin film, or the like. The thickness is preferably 0.001 to 3 mm and more preferably 0.01 to 2 mm. Once the thin film is formed to dry itself, it can be quickly dried. Therefore heat deterioration or the like hardly arises. The temperature of the heat source for drying is preferably 50 to 200°C, more preferably 60 to 190 °C, even more preferably 90 to 180°C, even more preferably 115 to 150 °C, under a normal pressure. The temperature of the thin film of the viscous material is preferably 40 to 180°C, more preferably 50 to 170°C, more preferably 70 to 160 °C, even more preferably 100 to 130°C. In other words, the temperature of the thin film of the viscous material is preferably 50 to 200°C, more preferably 50 to 160°C, even more preferably 60°C or more and 120°C or less, and even more preferably 80°C or less. In order to dry efficiently at a lower temperature of the heat source, the thin film may be dried under a reduced pressure.

From the viewpoint of thin film formation in heat drying, a viscosity of the viscous material is 50 to 500 mPa·s, and preferably 100 to 250 mPa·s at a temperature in 60 to 80°C. Contents of the anionic aromatic compound (a), the cationic surfactant (b), and in some cases the cationic polymer (c) are preferably adjusted such that the viscosity is in this range.

The thin film of the viscous material is stripped with a stripping means such as a metal scraper. The stripping means used may be those equipped in known dryers for thin films. As the stripping means, a stainless steel scraper of which a surface is treated with a treating agent such as Teflon so as to reduce its stickiness toward the thin film of the viscous material, may be used for example. The stripping means is preferably installed in a place where the thin film of the viscous material and the stripped thin film do not adhere to the stripping means and the supporting body. The stripping means is more preferably installed in a place where the thin film of the viscous material does not adhere to one another. The thin film of the viscous material on the supporting body is preferably stripped in an amount of 70 to 100 parts by weight, more preferably 90 to 100 parts by weight of 100 parts by weight thereof.

In a method using a supporting body, such as a drum of a drum dryer and a disc of a disc dryer, the thin film of a viscous material is preferably stripped from the supporting body, while being prevented from piling one on another. That is, a gas flow is preferably provided on the surface of the thin film, cooling the thin film stripped from the supporting body when the thin film is stripped from the supporting body. For example, when a viscous thin film is formed on a drum dryer or a disc dryer, it can be prevented that the thin film is piled one on another by a gas flow directed onto the surface of the thin film, preferably a jetted air.

Besides it can be prevented that the thin film is piled one on another by installing a guide plate surfaced with Teflon or the like to reduce an adhesion to the viscous thin film. A combination of the jetted air with the guide plate is preferable to prevent the thin film from piling one on another. Further, shape of the guide plate may be designed in accordance with the shape of the supporting body. When a cylindric supporting body, such as a drum dryer, is used, for example, the length at the longitudinal direction of the supporting body may be enough for the length of the guide plate. The width and thickness may not be taken into account.

The production process of the present invention preferably contains the following steps 1 to 3.
step 1: forming a thin film of the viscous material on a supporting means for the thin film
step 2: heating the thin film formed in step 1 with a heating means to dry
step 3: stripping the thin film dried in step 2 from the supporting means.

At least one and preferably all of the steps 1 to 3 are preferably conducted in a drum dryer. The drum dryer is preferred because it can conduct these steps successively. In the step 1, the viscous material is heated at the specific temperature and used for forming the thin film.

In the present invention, drying(drying step) is preferably conducted such that a water content of the viscous material is 5% or less by weight, and more preferably 2% or less by weight. A drying operation can be performed several times according to need. From the viewpoint of enhancing production rate and output, the viscous material is preferably dried with a drum dryer to 4 to 10% by weight of water content, and then with a conical dryer to 2% or less by weight of water content. In the process having steps 1 to 3, drying by a drum dryer is conducted at step 2, drying by a conical dryer is conducted at step 3 or later._The dried product is milled and classified according to the need to obtain a desired powder.

An example of the invention is a method for producing a powder containing a cationic surfactant (b), including mixing water, an anionic aromatic compound (a) and the cationic surfactant (b) to obtain a viscous material, heating the viscous material at 50 to 200°C, applying it to a supporting body to form a thin film of the viscous material on the supporting body and heating it for drying. This method can be conducted by drying the viscous material having a viscosity of 50 to 500 mPa· s with a drum dryer. Alternatively the viscous material may be dried to have the water content of 4 to 10% by weight and then further dried with a conical dryer to have the water content of 2% or less by weight.

The production process of the present invention is suitable for preparing a powdery rheology modifier.

The production process of the present invention is useful as a process for producing a powdery rheology modifier. That is, the present invention provides a process for producing a powdery rheology modifier, including drying the viscous material obtained by mixing water, an anionic aromatic compound (a) and the cationic surfactant (b), hereinafter called as the drying step, and subjecting the viscous material, heated at 50 to 120°C, to the drying step.

Particularly, the production process of the present invention is suitable for preparing a rheology modifier for slurry containing a hydraulic powder, because it provides a powder exhibiting an improving-effect of rheology in an aqueous solution with a high salt concentration. The present invention provides a powder containing the anionic aromatic compound (a), the cationic surfactant (b), and in some cases the cation polymer (c), in which a water content is 5% or less by weight. The powder prepared according to the present invention can modify rheology of a composition containing water such as aqueous solutions and slurry by being added to the composition.

The rheology modifier according to the present invention may contain other ingredients such as a dispersant, an AE agent, a retardant, a rapid strength agent, an accelerator, a bubbling agent, a foaming agent, an anti-foaming agent, a rust-proofing agent, a colorant, a mildew-proofing agent, a cracking reducing agent, an expanding agent, a dye, and a pigment insofar as the performance of the present invention is not impaired.

A hydraulic slurry containing the rheology modifier according to the present invention may contain a dispersant. Examples of the dispersant include water reducing agents such as lignin sulfonate and derivatives thereof, oxycarboxylates, polyol derivatives, high-performance water reducing agents and high-performance AE water reducing agents such as a naphthalene-based agent (Mighty 150, Kao Corporation), a melamine-based agent (Mighty 150V-2, Kao Corporation), polyether-based agents (Mighty 3000, Kao Corporation; Rheobuild SP, NMB; Aquarock FC600 and Aquarock FC900, Nippon Shokubai Co., Ltd.), and anionic surfactants such as polycarboxylic acid based-surfactants (Poise series, Kao Corporation). Among these, polyether-based high-performance water reducing agents and polycarboxylic acid-based surfactants are preferable, because both can satisfy fluidity and viscosity of the slurry.

A content of the dispersant in the hydraulic slurry containing the rheology modifier according to the present invention is generally 0.01 to 5% by weight, more preferably 0.05 to 3% by weight in terms of the content of its active ingredient in the hydraulic powder.

The hydraulic slurry containing the rheology modifier according to the present invention may contain other ingredients such as an AE agent, a retardant, a rapid strength agent, an accelerator, a bubbling agent, a foaming agent, anti-foaming agent, a cracking reducing agent, and an expanding agent.

The slurry of the present invention may contain a water reducing agent, including a common water reducing agent, and preferably a high-performance water reducing agent and a high-performance AE water reducing agent. Examples of the high-performance water reducing agent and the high-performance AE water reducing agent (hereinafter, referred to as high-performance water reducing agents) include a naphthalene-based agent (Mighty 150, Kao Corporation), a melamine-based agent (Mighty 150V-2, Kao Corporation), and polyether-based agents (Mighty 3000, Kao Corporation; Rheobuild SP, NMB; Aquarock FC600 and Aquarock FC900, Nippon Shokubai Co., Ltd.). From the viewpoint of a smaller effect on viscosity and dispersibility of concrete when used together with the compounds (A) and (B), among those high-performance water reducing agents, polyether-based agents are preferred. Amounts of high-performance water reducing agents used are 0.1 to 5% by weight, and preferably 1 to 3% by weight in total to the hydraulic powder.

Further, using the powder obtained by the producing method of the invention, having 5% by weight or less of water content, a hydraulic composition premix containing the powder and a hydraulic powder can be obtained. The hydraulic composition premix can include further aggregates. The hydraulic composition premix preferably includes the powder in the amount of 0.01 to 10% by weight, more preferably 0.05 to 7% by weight, even more preferably 0.1 to 3% by weight, a hydraulic powder in the amount of 10 to 95% by weight, more preferably 30 to 70% by weight, even more preferably 40 to 60% by weight, and aggregates in the amount of 5 to 80% by weight, more preferably 20 to 70% by weight, even more preferably 35 to 60% by weight.

The hydraulic composition premix can be produced by mixing the above-mentioned powder and the hydraulic powder, or mixing the above-mentioned powder, aggregates and the hydraulic powder.

### Examples

Following Examples describe embodiments of the present invention. Examples are intended only to illustrate the present invention and not to limit the present invention.

### [Measurement of viscosity]

Viscosities of the viscous material, aqueous solutions of the anionic aromatic compound (a) and of the cationic surfactant(b), and a mixture thereof were measured with a Brookfield viscometer (rotor No. 3) at 20°C.

### Example 1

### [preparation of powder]

In a glass-lined agitation tank (volume: 1.3m³), 500 kg of aqueous solution (S1) (concentration: 20% by weight) of sodium p-toluenesulfonate (anionic aromatic compound (a), Kao Corporation), 500 kg of aqueous solution (S2) (concentration: 29% by weight) of a 1:1 mixture at weight ratio (based on effective amounts) of palmityltrimethylammonium chloride (cationic surfactant (b), Kao Corporation) and stearyltrimethylammonium chloride (cationic surfactant (b), Kao Corporation), and 0.2 kg of anti-foaming agent (undiluted solution of FS Antifoam Q1-1183: Dow Corning Toray Co. Ltd.) were heated to 70°C and stirred for 30 minutes at a stirring rate of 50 rpm (stirring blade: shape; PFAUDLER type, size; blade diameter/body diameter = 0.5) to obtain a viscous material. The viscous material had a viscosity of 155 mPa·s at 70°C.

For the anionic aromatic compound (a) and the cationic surfactant (b) used above, a viscosity of 1% by weight solution of an equimolar mixture thereof in water was 1100 mPa·s at 20°C. The viscosity was measured with the mixture prepared by mixing the aqueous solution (S1) and the aqueous solution (S2).

250 kg of the viscous material prepared was charged in a raw material tank of a drum dryer, maintaining the above-mentioned temperature (70°C) . The drum was rotated at a drum rotation rate of 2.0 rpm at a vapor pressure adjusted at 0.64 to 0.68 MPa to have a drum surface temperature of 100 to 130 °C.

A thin film of the viscous material was formed on the surface of the drum at the bottom thereof (step 1), and moved together with the drum by about 270 degrees with the drum rotation, during which the thin film was dried (step 2). The thin film was stripped with a metal scraper from the drum (step 3). Upon stripping, the thin film was simultaneously blown with a cooling wind (external temperature, about 25°C) from a blower at the upper part of the thin film near the scraper to cool down the heated thin film.

The stripped dried matter was measured in view of its water content or moisture content. A dried matter containing 2% or less by weight of moisture was milled with a powdering machine (mill). The resultant powder was passed through a sieve of 1 mm mesh opening to obtain a finished powder. The finished powder had an average particle diameter of 200 µm.

### [Evaluation of powder]

The resultant powder was evaluated as follows. Results are shown in Table 1.

### (1) Measurement of water content

4 g of one day-old powder from preparation was charged in an infrared moisture determination balance (Kett Electric Laboratory), and measured for water content.

### (2) Particle size test

20 g of one day-old finished powder from preparation was charged in a desktop sieve shaker (As One Corporation: MVS-1), shaken for five minutes (level 5), and measured for a proportion (% by weight) of particles passed through a sieve of 250 µm mesh opening. A powder having the larger value is preferable.

### (3) Caking test

The finished powder was packed in a vinyl bag of 7 cm by 6 cm, stored for one month under conditions of 0.18 kg/cm² load, 20°C, and 60% RH, and then examined for appearance about caking. Caking was graded using the following levels.
○ : No caking observed.
Δ : partial caking observed, but easily crushed into a powder with fingers.
× : much caking observed.

### Example 2

A powder was similarly prepared as in Example 1, except that a part of water in the aqueous solution S1 was replaced with polymethacryloyloxyethyldimethylethylammonium salts (cationic polymer (c), weight average molecular weight: 120,000) in a concentration of 10% by weight. The resultant powder was similarly evaluated as in Example 1. Results are shown in Table 1. The viscosity of a viscous material before drying was 180 mPa·s at 70°C.

### Example 3

A powder was similarly prepared as in Example 1, except that drying was conducted with a drum dryer and a conical dryer. In drying, a drum rotation rate of the drum dryer was 2.5 rpm, and 200 kg of dried matter in which a water content was 5 to 10% by weight was charged in the conical dryer and further dried for 4 hours at 4.5 rpm to obtain a dried product in which a water content was 2% or less by weight. The dried material was milled with a powdering machine. The resultant powder was similarly evaluated as in Example 1. Results are shown in Table 1.

### Comparative Example 1

A powder was similarly prepared as in Example 1, except that the aqueous solution S1 was not used. After stripped with a scraper, when the powder was cooled, the powder immediately absorbed moisture (at this time, a moisture content was over 20% by weight), and thus was difficult to be milled. Accordingly, The product was not similarly evaluated as in Example 1. Comparative Example 1 is intended to prepare a powder from the aqueous solution of the cationic surfactant (b).

The cationic surfactant (b) obtained in Comparative Example 1 is highly hygroscopic, and it is presumed that when the cationic surfactant (b) is mixed with the anionic aromatic compound (a) in the powder form, a mixture forms a threadlike micelle, which is more viscous than the cationic surfactant (b) alone, and thus is difficult to be used as a powder. It is presumed that the mixture remains viscous when further mixed with the cationic polymer (c), and is difficult to be used as a powder.

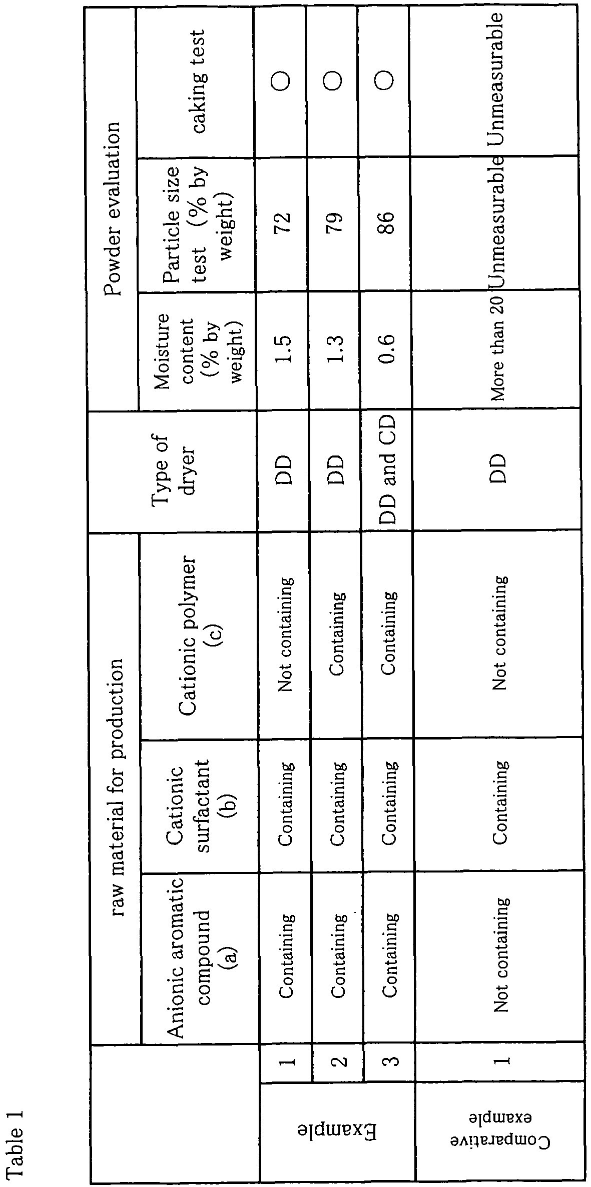

(cf.) In Table, abbreviations are referred as follows. The water content of Comparative Example 1 was measured immediately after mixing.
DD: drum dryer
CD: conical dryer

### Example 4

Powders prepared in the above-mentioned Examples were used for evaluating effects of improving rheology of slurry. Results are listed in Table 2. The slurry was prepared by dry-blending 400 g of ordinary portland cement (Taiheiyo Cement Corporation, density: 3.16) and 5 g (based on effective amount) of any of powders of Examples 1 to 3, adding 400 g of tap water, and mixing for 120 seconds with a hand mixer (Matsushita Electric Works, Ltd.). The test of the slurry was conducted at room temperature, 23°C, and a temperature of water for mixing and kneading was controlled such that a temperature of the slurry was 20°C.

A viscosity of the slurry was measured with a viscotester VT-04E (Rion Co. Ltd.) with a rotor NO.1 at a rotation rate 62.5 rpm, at 20°C.

Into a 500 mL beaker containing about 300 mL of water, 10 mL of the prepared slurry was incorporated from close onto the water surface. The water was observed for turbidity upon the addition. The slurry was evaluated for segregation resistance in water as judging ○: the case of no turbidity and x: the case of turbidity observed.

The residue of the slurry prepared was placed in a 500 mL disposable cup. The top of the cup was wrapped with a kitchen wrap (Saran Wrap, registered trademark, Asahi Kasei Life & Living Corporation) to prevent evaporation of water. The cup was allowed to stand at room temperature. An amount of water which bleeds until curing was measured.

**Table 2**

| Powder | Slurry viscosity (mPa·s/20°C) | Segregation resistance in water | Amount of bleeding water (mL) |
|---|---|---|---|
| Example 1 | 2500 | ○ | 0 |
| Example 2 | 2400 | ○ | 0 |
| Example 3 | 2500 | ○ | 0 |
| None | less than 50 | × | More than 100 |

It is seen from the results in Table 2 that powders of Examples 1 to 3 are preferred as rheology modifiers. Example 5, preparation method of premixed mortar and evaluation:
In a 300 L super mixer (Olympia Kakoki), materials listed in Table 3 excepting water, 0.13 kg of any powder in Examples 1 to 3, and 0.1 kg of an anti-foaming agent (silicone-based anti-foaming agent, main ingredient: dimethyl polysiloxane) were mixed while stirring at 200 rpm for 10 minutes. After being mixed, a mixture was passed through a vibration sifter of 3 mm mesh opening to obtain a premixed product.

1485 g of the premixed product was weighed and taken, added with 455 g of water, and kneaded for 60 seconds with a mortar mixer at 63 rpm to prepare a mortar. The following measurements were conducted. Results are listed in Table 4. Measurement method:
- flow test: mortar cone (JIS R 5201 eligible product)
- test of segregation resistance in water: similar to Example 4
- bleeding water: similar to Example 4

**Table 3 composition of premixed mortar**

| W/C (%) | C | S | W | Mighty 21P |
|---|---|---|---|---|
| 65 | 20kg | 22kg | 13kg | 0.06kg |

### Test material:

Cement (C): early-strength cement (density: 3.14, commercial product)
Sand (S): silica sand No. 7 (density: 2.60)
Water (W): tap water
Dispersant: Mighty 21P (Kao Corporation: powder of polyether-based superplasticizer)

**Table 4**

| Powder | Mortar flow (mm) | Segregation resistance in water | Bleeding water (mL) |
|---|---|---|---|
| Example 1 | 280X285 | ○ | 0 |
| Example 2 | 285X290 | ○ | 0 |
| Example 3 | 280X280 | ○ | 0 |
| None | 350X345 (segregation) | × | More than 50 |

## Claims

1. A process for producing a powder comprising a cationic surfactant (b), comprising the steps of
mixing water, an anionic aromatic compound (a) and the cationic surfactant (b) to obtain a viscous material wherein the viscous material contains the anionic aromatic compound (a) in an amount of 1 to 35% by weight and the cationic surfactant (b) in an amount of 1 to 40% by weight, and
drying the viscous material (drying step), the viscous material, heated at 50 to 120°C, being fed to the drying step,
wherein the viscous material has a viscosity of 50 to 500 mPa s at a temperature of 60 to 80°C,
wherein the cationic surfactant is in the form of a quaternary salt and has, in its structure, at least one saturated linear or branched alkyl group having 10 to 26 carbon atoms, and
wherein the anionic aromatic compound is selected from carboxylic acids having aromatic rings and salts thereof, phosphonic acids and salts thereof, and sulfonic acids and salts thereof.

2. The process for producing a powder according to claim 1, wherein the viscous material further comprises a cationic polymer (c).

3. The process for producing a powder according to claims 1 or 2, comprising the following steps 1 to 3:
step 1: forming a thin film of the viscous material on a supporting means for the thin film,
step 2: heating the thin film formed in step 1 with a heating means to dry,
step 3: stripping the thin film dried in step 2 from the supporting means.

4. A method for modifying rheology of a composition comprising water, comprising adding the powder obtainable by the process of any of claims 1 to 3 to the composition.

5. A premixed hydraulic composition comprising the powder obtainable by the process of any of the claims 1 to 3, and a hydraulic powder.

6. The premixed hydraulic composition according to claim 5, further comprising aggregates.

7. Use of the powder obtainable by the process of any one of claims 1 to 3 for preparing a premixed hydraulic composition comprising a hydraulic powder.

8. Use of the powder obtainable by the process of any of claims 1 to 3 for preparing a premixed hydraulic composition comprising a hydraulic powder and aggregates.

9. A process for producing a premixed hydraulic composition comprising a hydraulic powder, comprising mixing the powder obtainable by the process of any of claims 1 to 3 and the hydraulic powder.

10. A process for producing a premixed hydraulic composition comprising a hydraulic powder and aggregate, comprising mixing the powder obtainable by the process of any of claims 1 to 3, the hydraulic powder and the aggregates.

## Patentansprüche

1. Verfahren zur Erzeugung eines Pulvers, umfassend ein kationisches Tensid (b), umfassend die Schritte:
Mischen von Wasser, einer anionischen aromatischen Verbindung (a) und dem kationischen Tensid (b), unter Erhalt eines viskosen Materials, worin das viskose Material die anionische aromatische Verbindung (a) in einer Menge von 1 bis 35 Gew.% und das kationische Tensid (b) in einer Menge von 1 bis 40 Gew.% enthält, und
Trocknen des viskosen Materials (Trocknungsschritt), wobei das viskose Material, das auf 50 bis 120°C erwärmt ist, zum Trocknungsschritt geführt wird,
worin das viskose Material eine Viskosität von 50 bis 500 mPa·s bei einer Temperatur von 60 bis 80°C hat,
worin das kationische Tensid in der Form eines quaternären Salzes vorliegt und in der Struktur zumindest eine gesättigte lineare oder verzweigte Alkylgruppe mit 10 bis 26 Kohlenstoffatomen hat, und
worin die anionische aromatische Verbindung ausgewählt ist aus Carbonsäuren mit aromatischen Ringen und Salzen davon, Phosphonsäuren und Salzen davon und Sulfonsäuren und Salzen davon.

2. Verfahren zur Erzeugung eines Pulvers gemäß Anspruch 1, worin das viskose Material weiterhin ein kationisches Polymer (c) enthält.

3. Verfahren zur Erzeugung eines Pulvers gemäß Anspruch 1 oder 2, umfassend die folgenden Schritte 1 bis 3:
Schritt 1: Bildung eines dünnen Filmes aus dem viskosen Material auf einem Tragemittel für den dünnen Film,
Schritt 2: Erwärmen des dünnen Filmes, gebildet im Schritt 1, mit einer Erwärmungseinheit zum Trocknen,
Schritt 3: Abstreifen des dünnen Filmes, der im Schritt 2 getrocknet ist, von dem Tragemittel.

4. Verfahren zur Modifizierung der Rheologie einer Zusammensetzung, die Wasser enthält, umfassend das Zugeben des Pulvers, erhältlich durch das Verfahren gemäß einem der Ansprüche 1 bis 3, zu der Zusammensetzung.

5. Vorgemischte hydraulische Zusammensetzung, umfassend das Pulver, erhältlich durch das Verfahren gemäß einem der Ansprüche 1 bis 3, und ein hydraulisches Pulver.

6. Vorgemischte hydraulische Zusammensetzung gemäß Anspruch 5, weiterhin umfassend Aggregate.

7. Verwendung des Pulvers, erhältlich durch das Verfahren gemäß einem der Ansprüche 1 bis 3, zur Herstellung einer vorgemischten hydraulischen Zusammensetzung, umfassend ein hydraulisches Pulver.

8. Verwendung des Pulvers, erhältlich durch das Verfahren gemäß einem der Ansprüche 1 bis 3, zur Herstellung einer vorgemischten hydraulischen Zusammensetzung, umfassend ein hydraulisches Pulver und Aggregate.

9. Verfahren zur Erzeugung einer vorgemischten hydraulischen Zusammensetzung, umfassend ein hydraulisches Pulver, umfassend das Mischen des Pulvers, erhältlich durch das Verfahren gemäß einem der Ansprüche 1 bis 3, und des hydraulischen Pulvers.

10. Verfahren zur Erzeugung einer vorgemischten hydraulischen Zusammensetzung, umfassend ein hydraulisches Pulver und Aggregat, umfassend das Mischen des Pulvers, erhältlich durch das Verfahren gemäß einem der Ansprüche 1 bis 3, des hydraulischen Pulvers und der Aggregate.

## Revendications

1. Procédé de fabrication d'une poudre comprenant un agent tensioactif cationique (b), comprenant les étapes consistant à
mélanger de l'eau, un composé aromatique anionique (a) et l'agent tensio-actif cationique (b) pour obtenir un matériau visqueux, dans lequel le matériau visqueux contient le composé aromatique anionique (a) en une quantité de 1 à 35 % en poids et l'agent tensioactif cationique (b) en une quantité de 1 à 40 % en poids, et
sécher le matériau visqueux (étape de séchage), le matériau visqueux, chauffé entre 50 et 120°C, étant alimenté à l'étape de séchage,
dans lequel le matériau visqueux a une viscosité de 50 à 500 mPa.s à une température de 60 à 80°C,
dans lequel l'agent tensio-actif cationique est sous la forme d'un sel quaternaire et possède, dans sa structure, au moins un groupe alkyle linéaire ou ramifié saturé ayant 10 à 26 atomes de carbone, et
dans lequel le composé aromatique anionique est choisi parmi des acides carboxyliques ayant des cycles aromatiques et des sels de ceux-ci, des acides phosphoriques et des sels de ceux-ci, et des acides sulfoniques et des sels de ceux-ci.

2. Procédé de fabrication d'une poudre selon la revendication 1, dans lequel le matériau visqueux comprend en outre un polymère cationique (c).

3. Procédé de fabrication d'une poudre selon les revendications 1 ou 2, comprenant les étapes 1 à 3 suivantes :
étape 1 : former un film mince du matériau visqueux sur un moyen de support pour le film mince,
étape 2 : chauffer le film mince formé dans l'étape 1 avec un moyen de chauffage pour sécher,
étape 3 : démouler le film mince séché à l'étape 2 du moyen de support.

4. Procédé pour modifier la rhéologie d'une composition comprenant de l'eau, comprenant l'addition de la poudre pouvant être obtenue par le procédé selon l'une quelconque des revendications 1 à 3 à la composition.

5. Composition hydraulique pré-mélangée comprenant la poudre pouvant être obtenue par le procédé selon l'une quelconque des revendications 1 à 3, et une poudre hydraulique.

6. Composition hydraulique pré-mélangée selon la revendication 5, comprenant en outre des agrégats.

7. Utilisation de la poudre pouvant être obtenue par le procédé selon l'une quelconque des revendications 1 à 3 pour préparer une composition hydraulique pré-mélangée comprenant une poudre hydraulique.

8. Utilisation de la poudre pouvant être obtenue par le procédé selon l'une quelconque des revendications 1 à 3 pour préparer une composition hydraulique pré-mélangée comprenant une poudre hydraulique et des agrégats.

9. Procédé de fabrication d'une composition hydraulique pré-mélangée, comprenant une poudre hydraulique, comprenant le mélange de la poudre pouvant être obtenue par le procédé selon l'une quelconque des revendications 1 à 3 et de la poudre hydraulique.

10. Procédé de fabrication d'une composition hydraulique pré-mélangée comprenant une poudre hydraulique et des agrégats, comprenant le mélange de la poudre pouvant être obtenue par le procédé selon l'une quelconque des revendications 1 à 3, de la poudre hydraulique et des agrégats.
